# EUROPÄISCHE PATENTSCHRIFT

(11) **EP 3 274 654 B1**
(45) Veröffentlichungstag und Bekanntmachung des Hinweises auf die Patenterteilung: **29.04.2020**
(21) Anmeldenummer: 15712622.8
(22) Anmeldetag: 26.03.2015
(51) Int. Cl.: G01B 21/04, G05B 19/4093

(54) **VERFAHREN, VORRICHTUNG UND COMPUTERPROGRAMMPRODUKT ZUM BESTIMMEN VON DIMENSIONELLEN EIGENSCHAFTEN EINES MESSOBJEKTS**
METHOD, DEVICE AND COMPUTER PROGRAM PRODUCT FOR DETERMINING DIMENSIONAL PROPERTIES OF A MEASURED OBJECT
PROCÉDÉ, DISPOSITIF ET PRODUIT PROGRAMME D'ORDINATEUR DE DÉTERMINATION DE PROPRIÉTÉS EN MATIÈRE DE DIMENSION D'UN OBJET MESURÉ

(43) Veröffentlichungstag der Anmeldung: 31.01.2018
(73) Patentinhaber: Carl Zeiss Industrielle Messtechnik GmbH, 73447 Oberkochen (DE)
(72) Erfinder: DOTSCHKAL, Florian, 73432 Aalen (DE); HAAS, Guenter, 73432 Aalen (DE); WANNER, Josef, 73447 Oberkochen (DE); MAYER, Florian, 71522 Backnang (DE); SCHRAMM, Tobias, 73569 Eschach (DE)
(74) Vertreter: Witte, Weller & Partner Patentanwälte mbB
(86) Internationale Anmeldenummer: PCT/EP2015/056613
(87) Internationale Veröffentlichungsnummer: WO 2016/150517

(56) Entgegenhaltungen:
- EP-A1- 2 801 876
- US-A1- 2010 060 903
- US-A1- 2010 138 028
- US-A1- 2010 268 355

## Beschreibung

Die vorliegende Erfindung betrifft ein Verfahren und eine Vorrichtung zum Bestimmen von dimensionellen Eigenschaften eines Messobjekts, das eine Vielzahl von Geometrieelementen besitzt.

EP 2 738 515 A1 offenbart ein typisches Beispiel einer solchen Vorrichtung in Form eines Koordinatenmessgerätes. Das bekannte Koordinatenmessgerät besitzt eine Werkstückaufnahme und eine CCD Kamera, die in drei orthogonalen Raumrichtungen relativ zu der Werkstückaufnahme verfahrbar ist. Die CCD Kamera ist Teil eines Messkopfes, mit dessen Hilfe die Position von ausgewählten Messpunkten an einem Messobjekt relativ zu einem Referenzkoordinatensystem bestimmt werden kann. Üblicherweise werden mit einer solchen Vorrichtung Messpunktkoordinaten für eine Vielzahl von Messpunkten an einem Messobjekt bestimmt. Anhand dieser Messpunktkoordinaten lassen sich dann dimensionelle Eigenschaften des Messobjekts bestimmen, wie etwa der Durchmesser einer Bohrung oder der Abstand zwischen zwei Kanten an dem Messobjekt.

Prinzipiell ist es möglich, die Bewegungen des Messkopfes relativ zu dem Messobjekt und die Aufnahme der Messwerte von Hand zu steuern. Bei der Qualitätskontrolle von industriell hergestellten Produkten ist jedoch ein automatisierter Messablauf wünschenswert, so dass eine Vielzahl von typgleichen Messobjekten möglichst schnell und reproduzierbar gemessen werden können. Die Erstellung eines automatisierten Messablaufs erfordert grundlegende Kenntnisse über die Funktionsweise von Koordinatenmessgeräten sowie Erfahrung, wie verschiedene geometrische Elemente an einem Messobjekt am Besten gemessen werden können. Darüber hinaus kann ein optimaler Messablauf in Abhängigkeit davon variieren, welche Art von Messkopf und/oder welche Bewegungsachsen an einem Koordinatenmessgerät zur Verfügung stehen. So kann ein Messkopf mit einem berührungslosen Sensor, wie etwa bei dem Koordinatenmessgerät aus EP 2 738 515 A1, einen anderen Messablauf erfordern als beispielsweise ein taktiler Messkopf, d.h. ein Messkopf mit einem Tastelement, das dazu ausgebildet ist, ausgewählte Messpunkte an dem Messobjekt zu berühren.

EP 2 738 515 A1 schlägt vor, zusätzlich zu der CCD Kamera am Messkopf noch eine Weitwinkel-Überwachungskamera zu verwenden. Die Weitwinkel-Überwachungskamera ist dazu ausgebildet, ein Bild von dem gesamten Messobjekt aus der Vogelperspektive aufzunehmen. Dieses (weitere) Bild wird auf der Anzeige eines Bedienerterminals dargestellt, um dem Bediener die Erstellung eines automatisierten Messablaufs unter Berücksichtigung und Vermeidung von möglichen Kollisionen zwischen Messkopf und Messobjekt zu erleichtern. Darüber hinaus bietet die Vorrichtung aus EP 2 738 515 A1 jedoch keine weitergehende Unterstützung bei der Erstellung eines Messablaufs und der Bediener benötigt folglich tiefgreifende Kenntnisse und Erfahrungen, um einen optimalen Messablauf für ein spezifisches Messobjekt zu erstellen.

Die Carl Zeiss Industrielle Messtechnik bietet unter der Bezeichnung CALYPSO eine Software zur Erstellung eines automatischen Messablaufs und zur Verarbeitung der erhaltenen Messergebnisse an. Die Grundlagen von CALYPSO sind beispielsweise in einer Broschüre mit dem Titel *"Einfach Messen und was Sie dazu wissen sollten* - *Eine Fibel der Messtechnik"* (Bestellnummer bei Carl Zeiss: 61212-2400101) beschrieben. Die Erstellung des Messablaufs mit CALYPSO erfolgt anhand von so genannten Prüfmerkmalen. Ein Prüfmerkmal repräsentiert eine dimensionelle Eigenschaft eines definierten geometrischen Elements (Messelements) an einem Messobjekt, wie etwa den Durchmesser einer Bohrung, die Rundheit eines Zylinderabschnitts oder die Position eines solchen Geometrieelements bezogen auf das Referenzkoordinatensystem. Um ein Prüfmerkmal zu einem Geometrieelement zu quantifizieren, müssen in der Regel mehrere Messpunkte an dem Geometrieelement erfasst werden, so dass die Quantifizierung eines Prüfmerkmals die Aufnahme von mehreren individuellen Messwerten erfordern kann. Mit der Auswahl eines Prüfmerkmals erstellt CALYPSO Steuerbefehle, mit denen der Messkopf zum Messen der zugehörigen Messpunkte automatisch gesteuert werden kann. Durch die Orientierung an Prüfmerkmalen erleichtert CALYPSO einem Bediener die Erstellung des Messablaufs, weil die Prüfmerkmale in der Regel mit Angaben korrespondieren, die der Bediener einer technischen Zeichnung des Messobjekts entnehmen kann. Darüber hinaus ist CALYPSO in der Lage, Geometrieelemente mit definierten Regelgeometrien, wie etwa Kreis, Zylinder, Rechteck, Gerade etc., automatisch zu erkennen, wenn die entsprechenden Messpunktkoordinaten von dem Geometrieelement zur Auswertung zur Verfügung stehen.

Zur Erstellung eines automatischen Messablaufs muss der Bediener allerdings alle Prüfmerkmale an dem Messobjekt vorab erkennen und festlegen, d.h. die Erstellung des Messablaufs beginnt mit der Erkennung und Festlegung aller benötigten Prüfmerkmale bei einer Planung "am Schreibtisch". Anschließend muss der Bediener alle Geometrieelemente an dem Messobjekt den zuvor ausgewählten Prüfmerkmalen zuordnen. Danach führt der Bediener der Reihe nach mit manueller Steuerung alle Messschritte aus, die das Gerät später automatisiert ausführen soll. Wenngleich CALYPSO die Erstellung eines automatischen Messablaufs auf diese Weise bereits erleichtert, muss der Bediener immer noch über erhebliches Fachwissen und Erfahrung verfügen, um einen sinnvollen Messablauf zu erstellen. Die Kenntnisse und Erfahrungen des Bedieners müssen insbesondere die individuelle Funktionsweise des verwendeten Koordinatenmessgerätes beinhalten, um einen Messablauf zu erhalten, der auf möglichst effiziente Weise alle Messwerte mit der gewünschten Genauigkeit liefert.

Die Firma Keyence Corporation bietet unter der Bezeichnung "Modellreihe IM" ein Messsystem an, bei dem die Erstellung von Messabläufen über ein Symbolmenü erfolgt. Der Bediener wählt auch hier zunächst einzelne allgemeine Prüfmerkmale aus einem Symbolmenü aus. Anschließend wählt der Bediener in einem weiteren Schritt konkrete Messelemente aus, an denen die zuvor gewählten Prüfmerkmale bestimmt werden sollen. Die Aufnahme der Messwerte erfolgt anhand von Silhouettenbildern des Messobjekts. Wenngleich die Auswahl von Prüfmerkmalen anhand angebotener Symbole für allgemeine Prüfmerkmale für den Bediener recht komfortabel ist, erfordert auch dieses bekannte System erhebliche Kenntnisse und Erfahrungen über den Zusammenhang zwischen individuellen Messelementen an einem Messobjekt und den messtechnisch interessanten Prüfmerkmalen.

US 2010/0268355 A1 offenbart ein Verfahren und eine Vorrichtung zum Programmieren eines Koordinatenmessgerätes gemäß den Oberbegriffen der Ansprüche 1 und 10. Aus einer Punktewolke wird hier ein polygonales Gittermodell des zu vermessenden Objekts erstellt. Anhand des Gittermodells werden Messelemente und ein Objektkoordinatensystem bestimmt. Im Anschluss daran wird ein Messablauf bestimmt und auf Kollisionen geprüft. Falls notwendig wird der Messablauf modifiziert, um Kollisionen zu vermeiden. Zum Schluss wird ein Messprogramm ausgegeben, mit dem das Koordinatenmessgerät betrieben werden kann.

US 2010/0138028 A1 beschreibt ein Verfahren, bei dem man mit einem Graphikprogramm erzeugte Figuren auf ein Bild eines Messobjekts ziehen kann, um die Vermessung von Merkmalen zu initiieren.

US 2010/0060903 A1 offenbart zwei Varianten zum Vermessen eines Messobjekts. In der ersten Variante erfolgt eine vollautomatische Messung aller Merkmale, sobald ein zu vermessendes Werkstück anhand seiner Eigenschaften als ein grundsätzlich bekanntes Messobjekt identifiziert worden ist. Eine individuelle Bedienerauswahl ist nicht vorgesehen. In der zweiten Variante werden dem Bediener Musterformen anhand von *Thumbnails* zur Auswahl angeboten. Sobald der Bediener eine Musterform auswählt, werden alle damit verbundenen Messschritte in einen Messablauf übernommen.

EP 2 801 876 A1 offenbart eine graphische Benutzerschnittstelle zum Programmieren eines Messablaufs, wobei es möglich ist, wiederholte Teilabläufe, etwa zum Vermessen benachbarter Bohrungen, individuell zu editieren.

WO 03/044452 A1 offenbart ein handgeführtes Koordinatenmessgerät sowie ein Verfahren, um den Bediener bei einer Messung anzuleiten. Der Bediener kann eine Messung ausführen und sogenannte GD & T-Daten für eine Toleranzbestimmung eingeben. Die Messwerte und die GD & T-Daten werden zusammengeführt. Wenn der Bediener GD & T-Daten auf bereits gemessene Merkmale anwenden möchte, muss er die benötigten Merkmale aus einer Liste der vorhandenen Messergebnisse auswählen.

WO 02/25207 A1 beschreibt ein weiteres Verfahren zum Messen einer Objektgeometrie mit Hilfe eines Koordinatenmessgerätes. Bei Änderung eines Bildinhaltes wird dieser automatisch nach geeigneten geometrischen Strukturen zur Messung des Objekts durchsucht. Geeignete Strukturen werden markiert und zur Auswertung zur Verfügung gestellt.

Vor diesem Hintergrund ist es eine Aufgabe der vorliegenden Erfindung, ein Verfahren und eine Vorrichtung der eingangs genannten Art anzugeben, die auf einfache und schnelle Weise die Bestimmung von dimensionellen Eigenschaften eines individuellen Messobjekts mit einer Genauigkeit ermöglichen, die unter Berücksichtigung des zur Verfügung stehenden Sensors und der Maschinentoleranzen der Messvorrichtung optimiert sind.

Gemäß einem ersten Aspekt der Erfindung wird diese Aufgabe durch ein Verfahren gemäß Anspruch 1 gelöst, mit folgenden Schritten:
- Bereitstellen eines Koordinatenmessgerätes mit einem Messkopf zum Aufnehmen von Messwerten, die eine Position von zumindest einem Messpunkt an dem Messobjekt repräsentieren,
- Bereitstellen einer Datenbank, die eine Vielzahl von vordefinierten Messelementen und eine Vielzahl von typischen Prüfmerkmalen zu den vordefinierten Messelementen enthält, wobei jedes typische Prüfmerkmal aus der Vielzahl von typischen Prüfmerkmalen eine definierte dimensionelle Eigenschaft von zumindest einem vordefinierten Messelement repräsentiert,
- Bereitstellen einer bildlichen Darstellung des Messobjekts, die zumindest ein erstes und ein zweites Geometrieelement aus der Vielzahl von Geometrieelementen zeigt, - Selektieren der Geometrieelemente anhand der bildlichen Darstellung und selektieren von Prüfmerkmalen für die Geometrieelemente, und
- computerunterstütztes Erstellen eines definierten Messablaufs in Abhängigkeit von den selektierten Prüfmerkmalen,
wobei der Schritt des Selektierens ein Selektieren von einzelnen Geometrieelementen in der bildlichen Darstellung des Messobjekts durch einen Bediener beinhaltet,
wobei geeignete Prüfmerkmale für das erste Geometrieelement in der bildlichen Darstellung des Messobjekts grafisch angezeigt werden, wenn der Bediener das erste Geometrieelement selektiert, wobei die geeigneten Prüfmerkmale aus der Vielzahl der typischen Prüfmerkmale bestimmt werden, indem das selektierte erste Geometrieelement einem vordefinierten Messelement aus der Vielzahl von vordefinierten Messelementen zugeordnet wird, und wobei sich die Anzeige der zur weiteren Selektion angebotenen Prüfmerkmale in Abhängigkeit von der aktuellen Selektion verändert, wenn der Bediener ein anderes Geometrieelement und/oder weitere Geometrieelemente selektiert,
wobei ferner zumindest ein angezeigtes geeignetes Prüfmerkmal für das erste Geometrieelement durch den Bediener in der bildlichen Darstellung des Messobjekts selektiert wird, wobei das zumindest eine angezeigte geeignete Prüfmerkmal durch die Selektion zu einem selektierten Prüfmerkmal für das erste Geometrieelement wird, und
wobei der definierte Messablauf in Abhängigkeit von dem selektierten Prüfmerkmale computerunterstützt erstellt wird,
und ferner mit den weiteren Schritten
- Aufnehmen von individuellen Messwerten an dem ersten Geometrieelement mit Hilfe des Messkopfes und in Abhängigkeit von dem definierten Messablauf, und
- Bestimmen eines Zahlenwertes in Abhängigkeit von den individuellen Messwerten, wobei der Zahlenwert eine dimensionelle Eigenschaft des ersten Geometrieelements repräsentiert, die dem selektierten Prüfmerkmal entspricht.

Gemäß einem weiteren Aspekt der Erfindung wird diese Aufgabe durch eine Vorrichtung gemäß Anspruch 10 gelöst, mit einer Werkstückaufnahme zum Halten des Messobjekts, mit einem Messkopf, der relativ zu der Werkstückaufnahme verfahrbar ist und zum Aufnehmen von Messwerten ausgebildet ist, die eine Position von zumindest einem Messpunkt an dem Messobjekt repräsentieren, mit einer Auswerte- und Steuereinheit, die den Messkopf in Abhängigkeit von einem definierten Messablauf relativ zu der Werkstückaufnahme verfährt, und mit einem Bildanzeigegerät, wobei die Auswerte- und Steuereinheit eine Datenbank aufweist, die eine Vielzahl von vordefinierten Messelementen und eine Vielzahl von typischen Prüfmerkmalen zu den vordefinierten Messelementen enthält, wobei jedes typische Prüfmerkmal aus der Vielzahl von typischen Prüfmerkmalen eine definierte dimensionelle Eigenschaft von zumindest einem vordefinierten Messelement repräsentiert, wobei die Auswerte- und Steuereinheit dazu ausgebildet ist, eine bildliche Darstellung des Messobjekts, die zumindest ein erstes und ein zweites Geometrieelement aus der Vielzahl von Geometrieelementen zeigt, auf dem Bildanzeigegerät anzuzeigen, wobei die Auswerte- und Steuereinheit ein erstes Auswahlwerkzeug bereitstellt, um ein Selektieren der Geometrieelemente anhand der bildlichen Darstellung und ein Selektieren von Prüfmerkmalen zu ermöglichen, und wobei die Auswerte- und Steuereinheit ferner dazu ausgebildet ist, einen definierten Messablauf in Abhängigkeit von den selektierten Prüfmerkmalen zu erstellen, wobei das erste Auswahlwerkzeug ein gezieltes Selektieren von einzelnen Geometrieelementen in der bildlichen Darstellung des Messobjekts durch einen Bediener ermöglicht, wobei die Auswerte- und Steuereinheit ferner dazu ausgebildet ist, geeignete Prüfmerkmale für das erste Geometrieelement in der bildlichen Darstellung des Messobjekts grafisch anzuzeigen, wenn der Bediener das erste Geometrieelement selektiert, wobei die Auswerte- und Steuereinheit die geeigneten Prüfmerkmale in Abhängigkeit von der Selektion aus der Vielzahl der typischen Prüfmerkmale in der Datenbank bestimmt, indem sie das selektierte erste Geometrieelement einem vordefinierten Messelement aus der Vielzahl von vordefinierten Messelementen zuordnet, und wobei sich die Anzeige der zur weiteren Selektion angebotenen Prüfmerkmale in Abhängigkeit von der aktuellen Selektion verändert, wenn der Bediener ein anderes Geometrieelement und/oder weitere Geometrieelemente selektiert, wobei die Auswerte- und Steuereinheit ferner ein zweites Auswahlwerkzeug bereitstellt, um ein Selektieren von zumindest einem angezeigten geeigneten Prüfmerkmal durch den Bediener in der bildlichen Darstellung zu ermöglichen, wobei das zumindest eine angezeigte geeignete Prüfmerkmal durch die Selektion zu einem selektierten Prüfmerkmal wird, und wobei die Auswerte- und Steuereinheit ferner dazu ausgebildet ist, in Abhängigkeit von dem selektierten Prüfmerkmal individuelle Messwerte an dem ersten Geometrieelement aufzunehmen und einen Zahlenwert zu bestimmen, der eine dimensionelle Eigenschaft des ersten Geometrieelements repräsentiert, die dem selektierten Prüfmerkmal entspricht.

Besonders vorteilhaft ist es, wenn die vorliegende Erfindung mit Hilfe eines Computerprogramms mit Programmcode gemäß Anspruch 11 realisiert wird, der dazu ausgebildet ist, das vorgenannte Verfahren auszuführen, wenn der Programmcode auf einer Auswerte- und Steuereinheit eines Koordinatenmessgerätes ausgeführt wird.

Das neue Verfahren und die entsprechende Vorrichtung verwenden eine Datenbank, in der typische Prüfmerkmale für eine Vielzahl von vordefinierten Messelementen abgelegt sind. Die typischen Prüfmerkmale in der Datenbank sind unabhängig von konkreten Geometrieelementen eines individuellen Messobjekts, das mit dem neuen Verfahren und der neuen Vorrichtung gemessen werden soll. Mit anderen Worten sind die typischen Prüfmerkmale in der Datenbank als generische Prüfmerkmale gespeichert, die auf allgemeine, mathematisch definierte Regelgeometrien bezogen sind. Beispielsweise sind in der Datenbank die typischen Prüfmerkmale "Kreisdurchmesser" und "Position des Kreismittelpunkts" für ein generisches kreisförmiges Messelement gespeichert, wobei der Kreisdurchmesser als unbestimmter, variabler Parameterwert enthalten ist. Vorzugsweise sind in der Datenbank außerdem diejenigen Steuerbefehle gespeichert, mit denen der Messkopf des Koordinatenmessgerätes gesteuert werden muss, um alle Messpunktkoordinaten zu bestimmen, die benötigt werden, um das jeweilige typische Prüfmerkmal zu quantifizieren. Wenn der Bediener nun ein erstes individuelles Geometrieelement an einem konkreten Messobjekt anhand der bildlichen Darstellung dieses konkreten Messobjektes selektiert, wird zunächst ein typgleiches Messelement in der Datenbank gesucht. Anschließend werden dem Bediener genau diejenigen Prüfmerkmale zur weiteren Selektion angeboten, die zu dem selektierten Geometrieelement passen, indem das selektierte Geometrieelement einem typgleichen Messelement in der Datenbank zugeordnet wird und diejenigen Prüfmerkmale angeboten werden, die dem typgleichen Messelement in der Datenbank zugeordnet sind. In der Datenbank ist jedem vordefinierten Messelement aus der Vielzahl von vordefinierten Messelementen zumindest ein typisches Prüfmerkmal zugeordnet, so dass zumindest ein geeignetes Prüfmerkmal angezeigt wird, wenn der Bediener in der bildlichen Darstellung ein individuelles Geometrieelement selektiert, zu dem in der Datenbank ein typgleiches Messelement mit einer definierten Regelgeometrie enthalten ist.

Das neue Verfahren und die entsprechende Vorrichtung besitzen den Vorteil, dass der Bediener gezielt diejenigen Prüfmerkmale angeboten bekommt, die für das individuelle Messobjekt und das verwendete Koordinatenmessgerät und/oder den verwendeten Messkopf Sinn machen. Mit der Selektion eines angebotenen und somit für das individuelle Messobjekt geeigneten Prüfmerkmals kann der Bediener die Quantifizierung dieses geeigneten Prüfmerkmals sehr schnell und einfach in den definierten Messablauf übernehmen. Der Bediener kann insbesondere einen individuellen Messablauf für ein individuelles Messobjekt erstellen, ohne dass er zuvor aus einer Vielzahl von generischen Prüfmerkmalen eine Vorentscheidung treffen muss. Statt dessen erfolgt mit Hilfe der Datenbank eine automatische Vorselektion und dem Bediener werden diejenigen Prüfmerkmale angeboten, die für das zuvor selektierte Geometrieelement und den verwendeten Messkopf sinnvoll und geeignet sind.

Nach der Selektion der individuell geeigneten Prüfmerkmale wird ein definierter Messablauf für das individuelle Messobjekt in Abhängigkeit von den selektierten Prüfmerkmalen erstellt, und zwar vorzugsweise automatisch von der Auswerte- und Steuereinheit desjenigen Koordinatenmessgerätes, auf dem die Messung durchgeführt wird. Dieser Schritt beinhaltet, dass anhand der Datenbank alle Messpunkte und alle erforderlichen Maschinenbewegungen bestimmt werden, um mit Hilfe des zur Verfügung stehenden Messkopfes genau diejenigen Messwerte aufzunehmen, aus denen sich ein Zahlenwert für das selektierte Prüfmerkmal bestimmen lässt.

Vorzugsweise enthält die Datenbank zu jedem vordefinierten generischen Messelement genau diejenigen generischen Steuerbefehle, mit denen die erforderlichen Messpunkte für die Quantifizierung des zugeordneten typischen Prüfmerkmals aufgenommen werden können. Mit der Selektion eines angebotenen Prüfmerkmals konfiguriert die Auswerte- und Steuereinheit mit Hilfe der Datenbank die generischen Steuerbefehle, um so individuelle Steuerbefehle für das Messen des selektierten Geometrieelements zu erhalten. Die Konfiguration, die eine Messstrategie repräsentiert, kann beispielsweise die Bestimmung der Länge von derjenigen Wegstrecke beinhalten, die der Messkopf relativ zu dem Messobjekt in einer oder mehreren definierten Richtungen verfahren muss. und/oder die Geschwindigkeit und/oder Bahnkurve, mit der dies erfolgt. Für einen optischen Messkopf mit einer Kamera kann die Konfiguration ferner die individuelle Einstellung des optimalen Arbeitsabstandes zu dem Messobjekt beinhalten.

Der Bediener erhält mit dem neuen Verfahren und der neuen Vorrichtung einen individuellen Messablauf, der die Eigenschaften und möglichen Fahrwege des Messkopfes relativ zu Werkstückaufnahme in Bezug auf das konkrete individuelle Messobjekt optimal berücksichtigen kann. Der Bediener kann auf sehr einfache und effiziente Weise einen Messablauf erstellen, der an die Eigenschaften des Messkopfes und das zu messende Geometrieelement optimal angepasst ist. Infolge dessen kann der Bediener auch ohne tiefgreifende Kenntnisse und Erfahrungen mit dem konkreten Messgerät eine hohe Messgenauigkeit in Verbindung mit einem schnellen Messablauf erreichen. Die oben genannte Aufgabe ist daher vollständig gelöst.

In einer bevorzugten Ausgestaltung der Erfindung enthält die Datenbank ferner eine Vielzahl von vordefinierten Verknüpfungselementen, wobei jedes vordefinierte Verknüpfungselement eine definierte Eigenschaft in Bezug auf mindestens zwei der vordefinierten Messelemente repräsentiert.

In dieser Ausgestaltung enthält die Datenbank nicht nur typische Prüfmerkmale zu einzelnen vordefinierten Messelementen, sondern auch vordefinierte Beziehungen zwischen solchen Messelementen. Beispielsweise kann ein vordefiniertes Verknüpfungselement einen Symmetriepunkt zwischen zwei typgleichen Messelementen repräsentieren. Ein weiteres vorteilhaftes Verknüpfungselement ist der Abstand zwischen zwei Messelementen. Die Ausgestaltung vereinfacht komplexe Messungen an komplexen Messobjekten. In bevorzugten Ausführungsbeispielen werden dem Bediener nicht nur einzelne Prüfmerkmale zu einem selektierten individuellen Geometrieelement angeboten, sondern auch geeignete und sinnvolle Verknüpfungselemente, die sich auf mehrere Geometrieelemente beziehen, sobald er mindestens zwei Geometrieelemente in der bildlichen Darstellung des Messobjekts selektiert hat.

In einer weiteren Ausgestaltung wird daher auch das zweite Geometrieelement anhand der bildlichen Darstellung selektiert, und anhand der Datenbank werden geeignete Verknüpfungselemente für das selektierte erste und zweite Geometrieelement angezeigt.

In dieser Ausgestaltung werden dem Bediener geeignete Verknüpfungselemente für die automatische Erstellung eines definierten Messablaufs angeboten, sobald mindestens zwei Geometrieelemente in der bildlichen Darstellung des Messobjekts selektiert wurden. Vorzugsweise erfolgt die Anzeige von geeigneten Prüfmerkmalen und die Anzeige von geeigneten Verknüpfungselementen zeitgleich, so dass der Bediener durch Selektieren von Prüfmerkmalen und Verknüpfungselementen in einer Darstellung sehr schnell und komfortabel zu einem komplexen Messablauf kommt, bei dem alle erforderlichen Messpunkte nur einmal gemessen werden und Doppelmessungen vermieden werden.

In einer weiteren Ausgestaltung werden auch geeignete Verknüpfungselemente für das selektierte erste (und vorzugsweise auch für das selektierte zweite) Geometrieelement in der bildlichen Darstellung grafisch angezeigt.

Diese Ausgestaltung bietet einen sehr guten Überblick auf die allgemein vorhandenen und bereits selektierten Geometrieelemente und auf die geeigneten und ggf. bereits selektierten Prüfmerkmale und Verknüpfungselemente. Damit vereinfacht diese Ausgestaltung die Erstellung eines optimalen Messablaufs und hilft, Fehler zu vermeiden, die nachteilige Korrekturen zur Folge haben. In einigen Ausführungsbeispielen werden Prüfmerkmale und/oder Verknüpfungselemente als Bemaßungspfeil oder in einem Fähnchen angezeigt, welches eine Sammlung mehrere Angaben enthält. Durch farbliche Unterscheidung wird dem Bediener vorteilhaft deutlich gemacht, welche Prüfmerkmale bereits selektiert wurden und welche noch zum Selektieren angeboten sind.

In einer weiteren Ausgestaltung wird der Zahlenwert zu dem selektierten Prüfmerkmal (und/oder Verknüpfungselement), der nach dem neuen Verfahren und mit der neuen Vorrichtung bestimmt wurde, von der Auswerte- und Steuereinheit in der bildlichen Darstellung angezeigt. Vorzugsweise blendet die Auswerte- und Steuereinheit den jeweiligen Zahlenwert zu jedem selektierten Prüfmerkmal und/oder Verknüpfungselement

In dieser Ausgestaltung wird in gewisser Weise eine technische Zeichnung des Messobjekts mit Hilfe der bildlichen Darstellung und der erhaltenen Zahlenwerte für die zuvor selektierten Prüfmerkmale und/oder Verknüpfungselemente nachgebildet. Dese Ausgestaltung besitzt den Vorteil, dass der Bediener am Ende neben dem "Soll" (also der technischen Zeichnung mit Bemaßung) eine entsprechende "Ist" Darstellung erhält. Die "Ist" Darstellung sieht in den bevorzugten Ausführungsbeispielen prinzipiell aus wie die Soll-Darstellung, enthält aber die anhand der Messung bestimmten "gemessenen" Zahlenwerte und, in einigen Ausführungsbeispielen, farbliche Kennzeichnungen, um die Abweichungen zwischen der technischen Zeichnung bzw. den CAD-Daten und den gemessenen Werten anzuzeigen.

In einigen bevorzugten Varianten beinhaltet die Vorrichtung ein Bildanzeigegerät mit einem Touchscreen, auf dem der Bediener angezeigte Geometrieelemente und/oder Prüfmerkmale und/oder Verknüpfungselemente durch Berühren direkt selektieren kann. Alternativ oder ergänzend kann die Selektion in der bildlichen Darstellung mithilfe eines Mauszeigers und/oder mit über eine PC Tastatur erfolgen. In einigen bevorzugten Ausführungsbeispielen wird der Messablauf vom Bediener allein durch Selektieren von Geometrieelementen und Prüfmerkmalen und/oder Verknüpfungselementen erstellt. Vorteilhaft erfolgt dies, ohne dass der Bediener Geometrieelemente, Prüfmerkmale und/oder Verknüpfungselemente in einer Menüstruktur selektieren muss, d.h. ausschließlich durch direktes Selektieren in der bildlichen Darstellung.

Diese Ausgestaltung ermöglicht eine besonders einfache und intuitive Selektion von Geometrieelementen, angebotenen Prüfmerkmalen und/oder Verknüpfungselementen durch den Bediener. Durch die gemeinsame Darstellung von selektierten Geometrieelementen und geeigneten Prüfmerkmalen und/oder Verknüpfungselementen und die Auswahl in der bildlichen Darstellung werden unnötige Mehrfachmessungen infolge eines ungünstigen Messablaufs auf effektive Weise vermieden. Dementsprechend trägt diese Ausgestaltung sehr vorteilhaft zu kurzen Konfigurations- und Messzeiten bei.

In einer weiteren Ausgestaltung wird das (konkrete) Messobjekt mit Hilfe des Messkopfes abgetastet, um die bildliche Darstellung bereitzustellen. Vorteilhaft besitzt die Vorrichtung einen Messkopf mit einer Kamera, die in der Lage ist, ein 2D-Bild von dem Messobjekt aufzunehmen und bereitzustellen. Prinzipiell kann die bildliche Darstellung des Messobjekts aber auch mit einem taktilen Messkopf und/oder etwa mithilfe einer Röntgenaufnahme erstellt werden.

Diese Ausgestaltung ermöglicht eine besonders einfache und schnelle Vermessung von "unbekannten" Messobjekten, zu denen keine CAD-Daten vorliegen. Darüber hinaus besitzt diese Ausgestaltung den Vorteil, dass die Erstellung eines Messablaufs anhand des konkreten Messobjekts erfolgt, so dass etwaige Abweichungen von bereitgestellten CAD-Daten frühzeitig berücksichtig werden und insbesondere Kollisionen zwischen dem Messkopf und dem Messobjekt vermieden werden können.

In einer weiteren Ausgestaltung wird die bildliche Darstellung des Messobjekts anhand von CAD-Daten erzeugt.

Diese Ausgestaltung ist besonders vorteilhaft, um die Übereinstimmung eines industriell hergestellten Serienprodukts mit den Spezifikationen für dieses Serienprodukt auf einfache und schnelle Weise zu überprüfen. Außerdem ermöglicht diese Ausgestaltung die Erstellung des Messablaufs für eine automatisierte Messung bereits zu einem Zeitpunkt, an dem das Messobjekt noch nicht verfügbar ist.

In einer weiteren Ausgestaltung werden die Schritte des Selektierens für mehrere Geometrieelemente aus der Vielzahl von Geometrieelementen und/oder für mehrere angezeigte geeignete Prüfmerkmale wiederholt, und der definierte Messablauf wird in Abhängigkeit von allen Selektionsschritten automatisch erstellt.

Vorteilhaft wird in dieser Ausgestaltung der gesamte Messablauf mit Hilfe des neuen Verfahrens und der entsprechenden Vorrichtung erstellt. Alternativ hierzu ist es in anderen Ausgestaltungen möglich, lediglich einzelne Geometrieelemente, Prüfmerkmale und/oder Verknüpfungselemente mit Hilfe des neuen Verfahrens und der entsprechenden Vorrichtung zu selektieren. Die bevorzugte Ausgestaltung ermöglicht demgegenüber jedoch eine besonders einfache und schnelle Vermessung, ohne dass der Bediener der Vorrichtung umfangreiche Detailkenntnisse und Erfahrung zu der Vorrichtung besitzen muss.

In einer weiteren Ausgestaltung wird ein Auswahlwerkzeug bereitgestellt, und das Anzeigen von geeigneten Prüfmerkmalen (und vorzugsweise auch das Anzeigen von geeigneten Verknüpfungselementen) erfolgt jeweils temporär, während das Auswahlwerkzeug im Bereich des ersten Geometrieelements positioniert wird.

Diese Ausgestaltung beinhaltet eine temporäre Vorschau von geeigneten Prüfmerkmalen und/oder Verknüpfungselementen, sobald sich das Auswahlwerkzeug im Bereich von entsprechenden Geometrieelementen befindet. Erst durch die bewusste Selektion eines angezeigten Prüfmerkmals und/oder Verknüpfungselements wird dieses in den definierten Messablauf übernommen. Die Ausgestaltung ermöglicht auf besonders einfache und schnelle Weise die Vermessung von komplexen Messobjekten, ohne dass der Bediener über tiefgreifende Kenntnisse und Erfahrungen in der Messtechnik verfügen muss.

In einer weiteren Ausgestaltung werden die Geometrieelemente des Messobjekts anhand der Datenbank automatisch identifiziert und den vordefinierten Messelementen zugeordnet, um die geeigneten Prüfmerkmale anzuzeigen.

Auch diese Ausgestaltung trägt auf vorteilhafte Weise dazu bei, dass der Bediener eines Koordinatenmessgerätes ohne tiefgreifende Erfahrung mit dem Gerät sehr schnell und einfach einen technisch optimalen Messablauf erstellen und die entsprechende Messung durchführen kann. Die Bestimmung von dimensionellen Eigenschaften eines Messobjekts ist somit besonders einfach und schnell möglich.

Der Schutzbereich der Erfindung wird durch die Ansprüche definiert. Ausführungsbeispiele der Erfindung sind in der Zeichnung dargestellt und werden in der nachfolgenden Beschreibung näher erläutert. Es zeigen:
- Figur 1: ein Ausführungsbeispiel der neuen Vorrichtung, mit der außerdem das neue Verfahren ausgeführt werden kann;
- Figur 2: eine bildliche Darstellung eines Messobjekts zur Erläuterung des neuen Verfahrens;
- Figur 3: die bildliche Darstellung des Messobjekts aus Fig. 2, wobei ein erstes Geometrieelement selektiert ist;
- Figur 4: die bildliche Darstellung des Messobjekts aus Fig. 2 mit zwei selektierten Geometrieelementen;
- Figur 5: die bildliche Darstellung des Messobjekts aus Fig. 2 mit mehreren selektierten Prüfmerkmalen; und
- Figur 6: ein Flussdiagramm zur Erläuterung eines Ausführungsbeispiels des neuen Verfahrens.

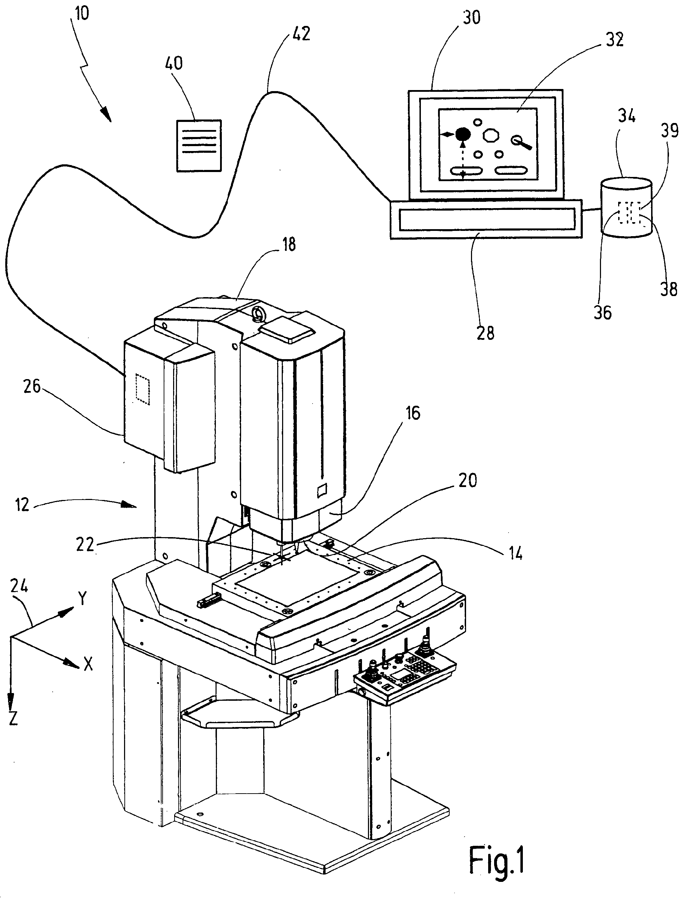

In Fig. 1 ist eine Vorrichtung, die nach dem neuen Verfahren arbeitet, in ihrer Gesamtheit mit der Bezugsziffer 10 bezeichnet.

Die Vorrichtung 10 beinhaltet ein Koordinatenmessgerät 12 mit einer Werkstückaufnahme 14 (hier in Form eines x-y-Kreuztisches) und einem Messkopf 16. Der Messkopf 16 ist an einer Säule 18 angeordnet und kann hier relativ zu der Werkstückaufnahme 14 in vertikaler Richtung entlang der Säule 18 verfahren werden. Üblicherweise wird diese Bewegungsachse als z-Achse bezeichnet. Die Werkstückaufnahme 14 kann relativ zu dem Messkopf 16 in zwei orthogonalen Richtungen verfahren werden, die üblicherweise als x- und y-Achse bezeichnet werden. Insgesamt kann der Messkopf 16 hier also in drei orthogonalen Raumrichtungen relativ zu der Werkstückaufnahme 14 verfahren werden, um eine Messung an einem Messobjekt (hier nicht dargestellt) durchzuführen. Die drei orthogonalen Raumrichtungen x, y, z spannen hier ein Maschinenkoordinatensystem auf, das in einigen Ausführungsbeispielen als Referenzkoordinatensystem für die Messpunktkoordinaten dient.

Es sind im Stand der Technik andere Konstruktionen für Koordinatenmessgeräte bekannt, beispielsweise Koordinatenmessgeräte in Portal- oder Brückenbauweise. Die neue Vorrichtung und das neue Verfahren sind nicht auf eine bestimmte Konstruktion der Bewegungsachsen beschränkt, so dass anstelle des Koordinatenmessgerätes 12 auch ein Koordinatenmessgerät verwendet sein kann, bei dem die Bewegung des Messkopfes 16 relativ zu der Werkstückaufnahme 14 auf andere Weise realisiert ist. Prinzipiell kann die Bewegung des Messkopfes 16 relativ zu der Werkstückaufnahme 14 auf weniger als drei Bewegungsachsen beschränkt sein oder der Messkopf 16 und/oder die Werkstückaufnahme 14 könnten weitere Bewegungsachsen, wie etwa Drehachsen, besitzen.

Der Messkopf 16 besitzt in diesem Ausführungsbeispiel einen optischen Sensor 20, mit dem ein Messobjekt (hier nicht dargestellt) berührungslos gemessen werden kann. In einigen Ausführungsbeispielen beinhaltet der optische Sensor 20 eine Kamera und ein Objektiv, um ein Bild von dem Messobjekt aufzunehmen. Darüber hinaus besitzt das Koordinatenmessgerät 12 in diesem Ausführungsbeispiel noch einen taktilen Sensor 22, mit dem Messpunkte an einem Messobjekt berührt werden können, um eine Messung durchzuführen.

Das Koordinatenmessgerät 12 zeigt hier ein bevorzugtes Ausführungsbeispiel für die neue Vorrichtung und das neue Verfahren. In anderen Ausführungsbeispielen kann die Vorrichtung einen anderen Messkopf aufweisen, etwa nur einen taktilen Messkopf oder nur einen optischen Messkopf. Prinzipiell könnte der Messkopf 16 auch einen kapazitiv messenden Sensor beinhalten oder beispielsweise ein nach dem Röntgenprinzip arbeitender Messkopf sein. In allen bevorzugten Ausführungsbeispielen liefert der Messkopf Messwerte, die die Position von zumindest einem Messpunkt an dem Messobjekt relativ zu einem Koordinatenmesssystem 24 repräsentieren.

Das Koordinatenmessgerät 12 besitzt eine Steuereinheit 26, mit deren Hilfe die Antriebe (hier nicht dargestellt) für die Werkstückaufnahme 14 und den Messkopf 16 angesteuert werden, um eine Messung durchzuführen. Des Weiteren nimmt die Steuereinheit 26 die Messwerte des Messkopfes16 auf und stellt sie zur weiteren Auswertung einer Auswerteeinheit 28 zur Verfügung. In dem dargestellten Ausführungsbeispiel ist die Auswerteeinheit 28 ein PC, auf dem eine Konfigurations- und Auswertesoftware ausgeführt wird. Die Konfigurations- und Auswertesoftware ermöglicht einerseits die Erstellung eines Messablaufs zur Durchführung einer automatisierten Messung an einem Messobjekt. Andererseits stellt die Auswertesoftware einem Bediener die quantifizierten Messergebnisse in geeigneter Weise zur Verfügung.

Die Auswerteeinheit 28 beinhaltet hier ein Bildanzeigegerät, auf dem unter anderem eine bildliche Darstellung 32 des Messobjekts angezeigt werden kann. In einigen bevorzugten Ausführungsbeispielen wird die bildliche Darstellung 32 mithilfe der Kamera des Sensors 20 erzeugt, d.h. die bildliche Darstellung ist ein 2D-Kamerabild von dem zu messenden Objekt. In anderen Ausführungsbeispielen kann die bildliche Darstellung 32 anhand von CAD-Daten eines Messobjekts erzeugt sein, wobei die CAD-Daten der Auswerteeinheit 28 in an sich bekannter Weise zugeführt sind. In weiteren Ausführungsbeispielen ist es denkbar, dass die Vorrichtung 10 eine spezielle Kamera aufweist, um die bildliche Darstellung 32 des Messobjekts zu erzeugen oder die bildliche Darstellung wird separat von der Vorrichtung 10 erzeugt und der Auswerteeinheit 28 als Bilddatei zugeführt.

Die Vorrichtung 10 besitzt eine Datenbank 34, in der eine Vielzahl von vordefinierten Messelementen 36, eine Vielzahl von typischen Prüfmerkmalen 38 und eine Vielzahl von typischen Verknüpfungselementen 39 zu den vordefinierten Messelementen 36 gespeichert sind. Dabei sind die typischen Prüfmerkmale 38 und Verknüpfungselemente 39 den vordefinierten Messelementen 36 jeweils so zugeordnet, dass zu einem vordefinierten Messelement anhand der Datenbank 34 jeweils typische Prüfmerkmale und/oder Verknüpfungselemente bestimmbar sind. Vordefinierte Messelemente sind insbesondere geometrische Elemente, die mithilfe von einfachen mathematischen Formeln abstrakt beschrieben werden können, wie beispielsweise Zylinder, Quader, Pyramide, Kegel, Kreis, Quadrat, Rechteck, Dreieck, Gerade u.a. Typische Prüfmerkmale für ein kreisförmiges Messelement sind der Durchmesser und die Position des Kreismittelpunkts relativ zu einem Referenzkoordinatensystem, das beispielsweise das Koordinatensystem 24 der Vorrichtung 10 sein kann.

In den bevorzugten Ausführungsbeispielen kann ein Bediener einen definierten Messablauf 40 zum Messen eines Messobjekts mithilfe der Darstellung 32 auf dem Bildanzeigegerät erstellen und an die Steuereinheit 26 übertragen, was hier durch eine Leitung 42 angedeutet ist. Der Messablauf 40 repräsentiert eine Vielzahl von Steuerbefehlen, die die Steuereinheit 26 dazu veranlassen, den Messkopf 16 relativ zu der Werkstückaufnahme 14 zu verfahren und individuelle Messwerte aufzunehmen. Mit Hilfe der Messwerte quantifiziert die Auswerteeinheit 28 selektierte Prüfmerkmale für das individuelle Messobjekt.

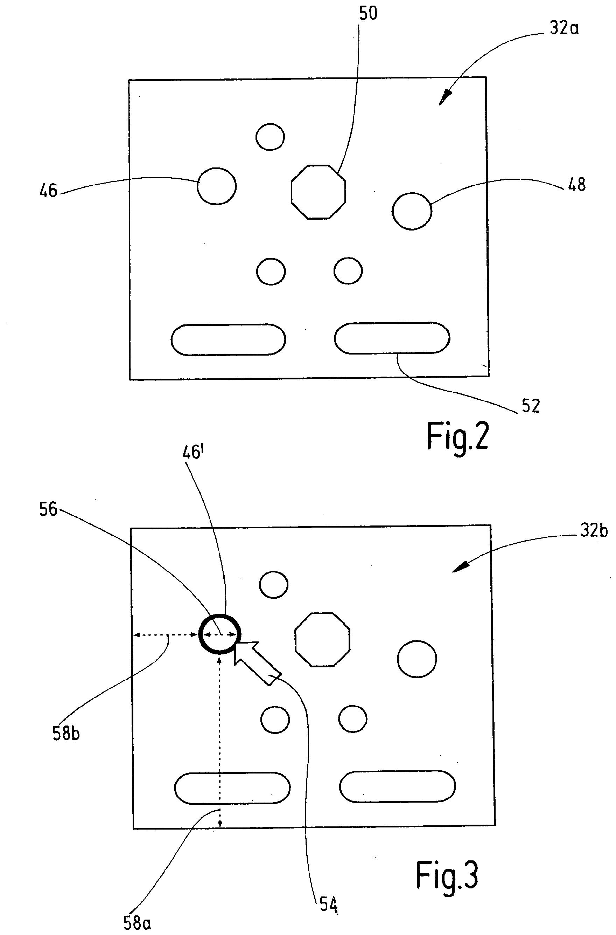

Fig. 2 zeigt eine vereinfachte Darstellung 32a eines Messobjekts, das eine Vielzahl von Geometrieelementen besitzt. Beispielhaft sind hier einige Geometrieelemente mit den Bezugsziffern 46, 48, 50, 52 bezeichnet. Die Geometrieelemente 46, 48 sind beispielsweise zylindrische Bohrungen, während das Geometrieelement 50 ein oktagonaler Zapfen ist, der aus der Betrachtungsebene vertikal heraussteht. Das Geometrieelement 52 ist beispielsweise eine ovale Vertiefung in der Oberfläche des hier nur schematisch und beispielhaft dargestellten Messobjekts.

Die Darstellung 32a wird auf dem Bildanzeigegerät 30 angezeigt. Der Bediener der Vorrichtung 10 kann nun in der nachfolgend beschriebenen Weise einzelne Geometrieelemente selektieren, um den Messablauf 40 mithilfe der Auswerteeinheit 28 automatisch erstellen zu lassen.

Fig. 3 zeigt eine Darstellung 32b, die der Darstellung 32a aus Fig. 2 entspricht. Allerdings hat der Bediener in der Darstellung 32b das Geometrieelement 46 mithilfe eines Mauszeigers 54 selektiert. In bevorzugten Ausführungsbeispielen wird ein selektiertes Geometrieelement optisch hervorgehoben, wie dies in Fig. 3 anhand des Geometrieelements 46' dargestellt ist. In einigen Ausführungsbeispielen kann die optische Hervorhebung durch eine farbige Markierung realisiert sein. Alternativ oder ergänzend kann der Bediener in einigen Ausführungsbeispielen eine Selektion über einen Touchscreen vornehmen, auf dem die Darstellung 32 angezeigt ist.

In den bevorzugten Ausführungsbeispielen bestimmt die Software der Auswerteeinheit 28 mithilfe der Datenbank 34 typische Prüfmerkmale für ein selektiertes Geometrieelement 46'. In einigen Ausführungsbeispielen besitzt die Auswerteeinheit 28 daher die Fähigkeit, Kanten in der bildlichen Darstellung 32 eines Messobjekts zu detektieren, um Geometrieelemente des Messobjekts automatisch zu identifizieren. Anschließend sucht die Auswerteeinheit 28 in der Datenbank 34 nach vordefinierten Messelementen, deren Form dem identifizierten Geometrieelement entspricht. Sobald die Auswerteeinheit 28 ein passendes vordefiniertes Messelement identifiziert hat, wählt sie anhand der Datenbank 34 die zugeordneten typischen Prüfmerkmale aus und zeigt diese in der bildlichen Darstellung 32 für das selektierte Geometrieelement 46' grafisch an. In der beispielhaften Darstellung der Fig. 3 sind die geeigneten Prüfmerkmale der Durchmesser 56 der Bohrung sowie die x- und y-Position 58a, 58b der Bohrung relativ zu dem Koordinatensystem 24.

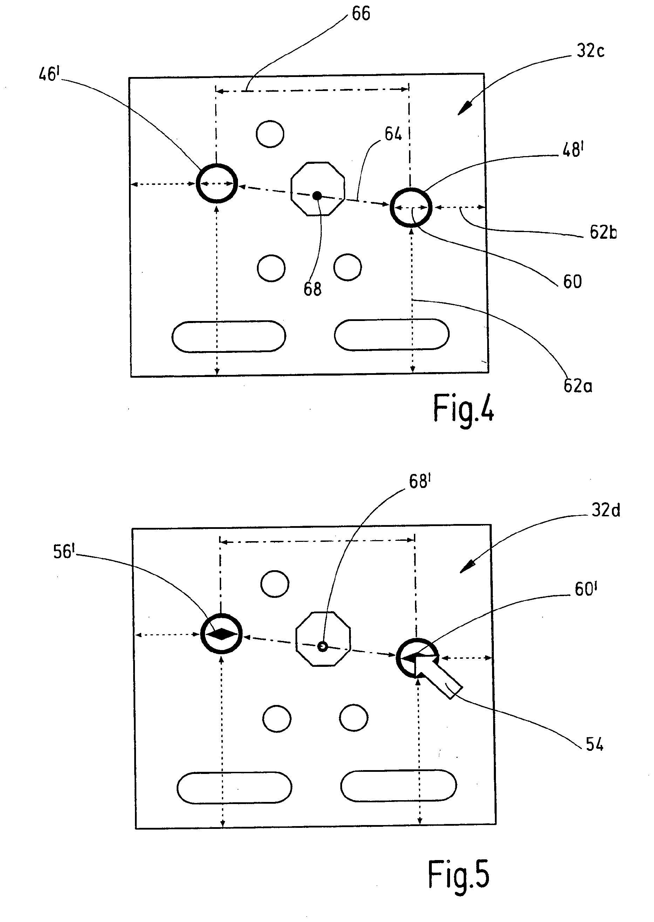

Fig. 4 zeigt eine weitere bildliche Darstellung 32c, die der Darstellung 32b aus Fig. 3 entspricht, allerdings nachdem der Bediener ein weiteres Geometrieelement 48' selektiert hat. Auch für das weitere selektierte Geometrieelement 48' bestimmt die Auswerteeinheit 28 mithilfe der Datenbank 34 geeignete Prüfmerkmale 60, 62a und 62b. Darüber hinaus bestimmt die Auswerteeinheit 28 in den bevorzugten Ausführungsbeispielen geeignete Verknüpfungselemente für die zumindest zwei selektierten Geometrieelemente. Ein geeignetes Verknüpfungselement ist in diesem Ausführungsbeispiel der relative Abstand 64 der beiden selektierten Geometrieelemente 46', 48'. Ein weiteres geeignetes Verknüpfungselement ist hier beispielsweise der seitliche Versatz 66 der Mittelpunkte der beiden selektierten Geometrieelemente 46', 48'. Ein weiteres Verknüpfungselement kann der Symmetriepunkt 68 zwischen den beiden selektierten Geometrieelementen 46', 48' sein. Allgemein sind Verknüpfungselemente Merkmale des zu messenden Objekts, die eine räumliche Beziehung zwischen zwei oder mehr Geometrieelementen an dem Messobjekt repräsentieren.

In der bildlichen Darstellung 32c der Fig. 4 sind zwei Geometrieelemente des Messobjekts selektiert und die Auswerteeinheit 28 bietet zu den selektierten Geometrieelementen 46', 48' geeignete Prüfmerkmale 56, 58, 60, 62 und Verknüpfungselemente 64, 66, 68 an. Fig. 5 zeigt demgegenüber eine bildliche Darstellung 32d, in der der Bediener mithilfe des Mauszeigers 54 die Prüfmerkmale 56' und 60' sowie das angebotene Verknüpfungselement 68' selektiert hat. In den bevorzugten Ausführungsbeispielen werden selektierte Prüfmerkmale und Verknüpfungselemente hervorgehoben, wie dies in Fig. 5 schematisch angedeutet ist. Mit der Selektion eines Prüfmerkmals und/oder Verknüpfungselements übernimmt die Auswerteeinheit 28 das selektierte Prüfmerkmal und/oder Verknüpfungselement in den Messablauf 40. Durch mehrfache Selektion kann der Bediener somit einen individuellen Messablauf für ein Messobjekt konfigurieren.

Die Erstellung des Messablaufs 40 erfolgt in den bevorzugten Ausführungsbeispielen nach Abschluss aller Selektionsschritte automatisch durch die Auswerteeinheit 28, indem die Auswerteeinheit 28 anhand der selektierten Prüfmerkmale und/oder Verknüpfungselemente sowie anhand von weiteren vordefinierten Informationen in der Datenbank 34 die Steuerbefehle für die Steuereinheit 26 bestimmt. Anschließend überträgt die Auswerteeinheit 28 den Messablauf 40 an die Steuereinheit zur Aufnahme der individuellen Messwerte an den selektierten Geometrieelementen des Messobjekts. Die Auswerteeinheit 28 liest die aufgenommenen Messwerte anschließend von der Steuereinheit 26 ein und bestimmt in Abhängigkeit von diesen Messwerten Zahlenwerte für alle selektierten Prüfmerkmale und/oder Verknüpfungselemente, wobei jeder dieser Zahlenwerte eine dimensionelle Eigenschaft des Messobjekts repräsentiert, die dem selektierten Prüfmerkmal und/oder Verknüpfungselement entspricht.

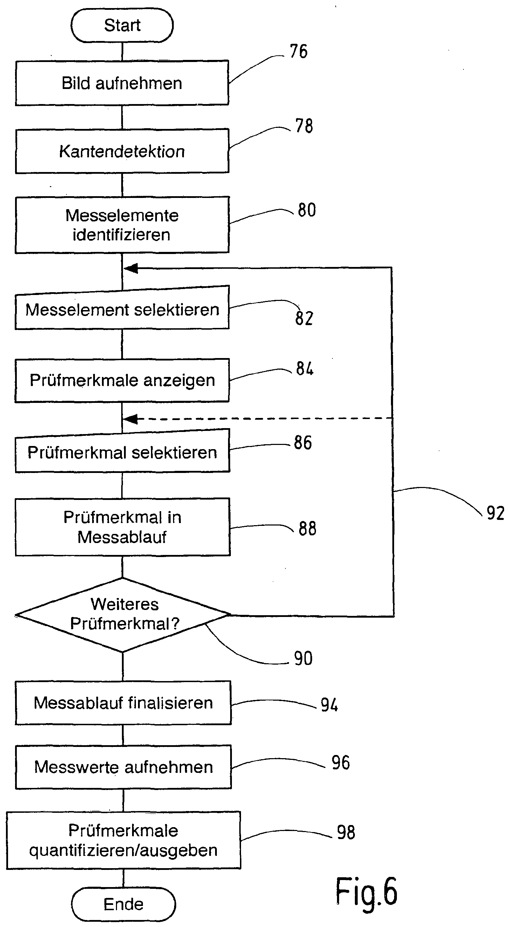

Ein bevorzugtes Ausführungsbeispiel dieses Verfahrens ist nachfolgend anhand Fig. 6 nochmals dargestellt. Gemäß Schritt 76 wird in diesem Ausführungsbeispiel zunächst ein Bild von dem Messobjekt aufgenommen. Alternativ könnte das Bild aus CAD-Daten des zu messenden Objekts erzeugt werden oder es könnte eine bildliche Darstellung des Messobjekts auf andere Weise, etwa als Röntgenaufnahme, bereitgestellt werden, beispielsweise als eine Punktewolke unabhängig vom erzeugenden Sensor.

Gemäß Schritt 78 erfolgt anschließend eine Kantendetektion, um gemäß Schritt 80 Geometrieelemente an dem Messobjekt zu identifizieren, die als Messelemente in Betracht kommen.

Gemäß Schritt 82 selektiert der Bediener anschließend ein Geometrieelement in der bildlichen Darstellung. Gemäß Schritt 84 werden ihm dann geeignete Prüfmerkmale für das selektierte Geometrieelement angeboten, wobei die geeigneten Prüfmerkmale mithilfe der Datenbank 34 bestimmt werden. Gemäß Schritt 86 selektiert der Bediener ein geeignetes Prüfmerkmal, welches gemäß Schritt 88 dann in den Messablauf übernommen wird. Anschließend erfolgt gemäß Schritt 90 eine Entscheidung, ob weitere Geometrieelemente und/oder Prüfmerkmale selektiert werden sollen. Wenn dies der Fall ist, können gemäß der Schleife 92 weitere Selektionsschritte 82, 86 ausgeführt werden.

Nachdem alle gewünschten Prüfmerkmale selektiert sind, wird der Messablauf finalisiert. Dies beinhaltet die Bestimmung von geeigneten Steuerbefehlen für die Steuereinheit 26 zur Aufnahme derjenigen Messwerte, die zur Quantifizierung der selektierten Prüfmerkmale benötigt werden.

Gemäß Schritt 96 werden anschließend die benötigten Messwerte aufgenommen und gemäß Schritt 98 werden die selektierten Prüfmerkmale anhand der aufgenommenen Messwerte quantifiziert und ausgegeben, beispielsweise auf dem Bildanzeigegerät 30.

Wie schon erwähnt, kann das Bildanzeigegerät 30 in einigen Ausführungsbeispielen einen Touchscreen beinhalten und die Selektion von Geometrieelementen, Prüfmerkmalen und/oder Verknüpfungselementen kann durch "Antasten" der jeweiligen Elemente auf dem Touchscreen erfolgen.

Insgesamt werden dem Bediener in allen bevorzugten Ausführungsbeispielen logisch sinnvolle Prüfmerkmale und/oder Verknüpfungselemente in Abhängigkeit von zuvor selektierten Geometrieelementen des zu messenden Objekts in der bildlichen Darstellung des Messobjekts direkt grafisch angezeigt und zur (weiteren) Selektion angeboten. Selektiert der Bediener ein anderes Geometrieelement und/oder weitere Geometrieelemente, verändert sich die Anzeige der zur weiteren Selektion angebotenen Prüfmerkmale und/oder Verknüpfungselemente in Abhängigkeit von der aktuellen Selektion. Vorteilhaft ist eine Mehrfachselektion von Geometrieelementen und/oder Prüfmerkmalen und/oder Verknüpfungselementen möglich. Besonders bevorzugt ist es, wenn der Bediener den Messablauf allein durch Selektion von angezeigten Geometrieelementen und dazu angebotenen Prüfmerkmalen und/oder Verknüpfungselementen erstellt, ohne dabei ergänzende Selektionen und/oder Konfigurationen durch Öffnen und Schließen von Menüs vorzunehmen.

## Patentansprüche

1. Verfahren zum Bestimmen von dimensionellen Eigenschaften eines Messobjekts, das eine Vielzahl von Geometrieelementen (46, 48, 50, 52) besitzt, mit den Schritten:
- Bereitstellen eines Koordinatenmessgerätes (12) mit einem Messkopf (16) zum Aufnehmen von Messwerten, die eine Position von zumindest einem Messpunkt an dem Messobjekt repräsentieren,
- Bereitstellen einer Datenbank (34), die eine Vielzahl von vordefinierten Messelementen (36) und eine Vielzahl von typischen Prüfmerkmalen (38) zu den vordefinierten Messelementen (36) enthält, wobei jedes typische Prüfmerkmal aus der Vielzahl von typischen Prüfmerkmalen (38) eine definierte dimensionelle Eigenschaft von zumindest einem vordefinierten Messelement repräsentiert,
- Bereitstellen einer bildlichen Darstellung (32) des Messobjekts, die zumindest ein erstes und ein zweites Geometrieelement (46, 48) aus der Vielzahl von Geometrieelementen (46, 48, 50, 52) zeigt,
- Selektieren der Geometrieelemente (46, 48) anhand der bildlichen Darstellung (32) und selektieren von Prüfmerkmalen (56, 58a, 58b) für die Geometrieelemente (46, 48), und
- computerunterstütztes Erstellen eines definierten Messablaufs (40) in Abhängigkeit von den Prüfmerkmalen,
**dadurch gekennzeichnet,**
**dass** der Schritt des Selektierens ein Selektieren von einzelnen Geometrieelementen in der bildlichen Darstellung (32) des Messobjekts durch einen Bediener beinhaltet,
**dass** geeignete Prüfmerkmale (56, 58a, 58b) für das erste Geometrieelement (46') in der bildlichen Darstellung (32) des Messobjekts grafisch angezeigt werden, wenn der Bediener das erste Geometrieelement (46') selektiert, wobei die geeigneten Prüfmerkmale (56, 58a, 58b) aus der Vielzahl der typischen Prüfmerkmale (38) bestimmt werden, indem das selektierte erste Geometrieelement (46') einem vordefinierten Messelement aus der Vielzahl von vordefinierten Messelementen (36) zugeordnet wird, und wobei sich die Anzeige der zur weiteren Selektion angebotenen Prüfmerkmale in Abhängigkeit von der aktuellen Selektion verändert, wenn der Bediener ein anderes Geometrieelement und/oder weitere Geometrieelemente (48) selektiert,
**dass** zumindest ein angezeigtes geeignetes Prüfmerkmal (56, 58a, 58b) für das erste Geometrieelement (46') durch den Bediener in der bildlichen Darstellung (32) des Messobjekts selektiert wird, wobei das zumindest eine angezeigte geeignete Prüfmerkmal durch die Selektion zu einem selektierten Prüfmerkmal (56') für das erste Geometrieelement (46) wird, und
**dass** der definierte Messablauf (40) in Abhängigkeit von dem selektierten Prüfmerkmal (56') computerunterstützt erstellt wird,
und ferner mit den weiteren Schritten
- Aufnehmen (96) von individuellen Messwerten an dem ersten Geometrieelement (46) mit Hilfe des Messkopfes (16) und in Abhängigkeit von dem definierten Messablauf (40), und
- Bestimmen (98) eines Zahlenwertes in Abhängigkeit von den individuellen Messwerten, wobei der Zahlenwert eine dimensionelle Eigenschaft des ersten Geometrieelements (46) repräsentiert, die dem selektierten Prüfmerkmal (56') entspricht.

2. Verfahren nach Anspruch 1, wobei die Datenbank (34) ferner eine Vielzahl von vordefinierten Verknüpfungselementen (39) enthält, und wobei jedes vordefinierte Verknüpfungselement eine definierte dimensionelle Eigenschaft in Bezug auf mindestens zwei der vordefinierten Messelemente (36) repräsentiert.

3. Verfahren nach Anspruch 2, wobei ferner das zweite Geometrieelement (48) anhand der bildlichen Darstellung (32) selektiert wird, und wobei anhand der Datenbank (34) geeignete Verknüpfungselemente (64, 66, 68) für das selektierte erste und zweite Geometrieelement (46', 48') zur weiteren Selektion angezeigt werden.

4. Verfahren nach einem der Ansprüche 1 bis 3, wobei der Zahlenwert zu dem selektierten Prüfmerkmal (56') in der bildlichen Darstellung angezeigt wird.

5. Verfahren nach einem der Ansprüche 1 bis 4, wobei das Messobjekt mit Hilfe des Messkopfes (16) abgetastet wird, um die bildliche Darstellung (32) bereitzustellen.

6. Verfahren nach einem der Ansprüche 1 bis 5, wobei die bildliche Darstellung (32) des Messobjekts anhand von CAD-Daten erzeugt wird.

7. Verfahren nach einem der Ansprüche 1 bis 6, wobei die Schritte des Selektierens für mehrere Geometrieelemente (46, 48) aus der Vielzahl von Geometrieelementen und/oder für mehrere angezeigte geeignete Prüfmerkmale (56, 58, 60, 62) wiederholt werden, und wobei der definierte Messablauf (40) in Abhängigkeit von allen Selektionsschritten automatisch erstellt wird.

8. Verfahren nach einem der Ansprüche 1 bis 7, wobei ein Auswahlwerkzeug (54) bereitgestellt wird, und wobei das Anzeigen von geeigneten Prüfmerkmalen (56, 58a, 58b) jeweils temporär erfolgt, während das Auswahlwerkzeug (54) im Bereich des angezeigten ersten Geometrieelements (46) positioniert wird.

9. Verfahren nach einem der Ansprüche 1 bis 8, wobei die Geometrieelemente (46, 48, 50, 52) des Messobjekts anhand der Datenbank (34) automatisch identifiziert und den vordefinierten Messelementen zugeordnet werden, um die geeigneten Prüfmerkmale anzuzeigen.

10. Vorrichtung zum Bestimmen von dimensionellen Eigenschaften eines Messobjekts, das eine Vielzahl von Geometrieelementen (46, 48, 50, 52) besitzt, mit einer Werkstückaufnahme (14) zum Halten des Messobjekts, mit einem Messkopf (16), der relativ zu der Werkstückaufnahme (14) verfahrbar ist und zum Aufnehmen von Messwerten ausgebildet ist, die eine Position von zumindest einem Messpunkt an dem Messobjekt repräsentieren, mit einer Auswerte- und Steuereinheit (26, 28), die den Messkopf in Abhängigkeit von einem definierten Messablauf (40) relativ zu der Werkstückaufnahme (14) verfährt, und mit einem Bildanzeigegerät (30), wobei die Auswerte- und Steuereinheit (26, 28) eine Datenbank (34) aufweist, die eine Vielzahl von vordefinierten Messelementen (36) und eine Vielzahl von typischen Prüfmerkmalen (38) zu den vordefinierten Messelementen (36) enthält, wobei jedes typische Prüfmerkmal aus der Vielzahl von typischen Prüfmerkmalen (38) eine definierte dimensionelle Eigenschaft von zumindest einem vordefinierten Messelement repräsentiert, wobei die Auswerte- und Steuereinheit (26, 28) dazu ausgebildet ist, eine bildliche Darstellung (32) des Messobjekts, die zumindest ein erstes und ein zweites Geometrieelement (46, 48) aus der Vielzahl von Geometrieelementen (46, 48, 50, 52) zeigt, auf dem Bildanzeigegerät (30) anzuzeigen, wobei die Auswerte- und Steuereinheit (26, 28) ein erstes Auswahlwerkzeug (54) bereitstellt, um ein Selektieren der Geometrieelemente (46, 48) anhand der bildlichen Darstellung (32) und ein Selektieren von Prüfmerkmalen (56, 58a, 58b) zu ermöglichen, und wobei die Auswerte- und Steuereinheit (26, 28) ferner dazu ausgebildet ist, einen definierten Messablauf (40) in Abhängigkeit von den selektierten Prüfmerkmalen zu erstellen, **dadurch gekennzeichnet, dass** das erste Auswahlwerkzeug (54) ein gezieltes Selektieren von einzelnen Geometrieelementen in der bildlichen Darstellung (32) des Messobjekts durch einen Bediener ermöglicht, dass die Auswerte- und Steuereinheit (26, 28) ferner dazu ausgebildet ist, geeignete Prüfmerkmale (56, 58a, 58b) für das erste Geometrieelement (46) in der bildlichen Darstellung (32) des Messobjekts grafisch anzuzeigen, wenn der Bediener das erste Geometrieelement (46') selektiert, wobei die Auswerte- und Steuereinheit (26, 28) die geeigneten Prüfmerkmale (56, 58a, 58b) in Abhängigkeit von der Selektion aus der Vielzahl der typischen Prüfmerkmale (38) in der Datenbank (34) bestimmt, indem sie das selektierte erste Geometrieelement (46') einem vordefinierten Messelement aus der Vielzahl von vordefinierten Messelementen (36) zuordnet, und wobei sich die Anzeige der zur weiteren Selektion angebotenen Prüfmerkmale in Abhängigkeit von der aktuellen Selektion verändert, wenn der Bediener ein anderes Geometrieelement und/oder weitere Geometrieelemente (48) selektiert, dass die Auswerte- und Steuereinheit (26, 28) ferner ein zweites Auswahlwerkzeug bereitstellt, um ein Selektieren von zumindest einem angezeigten geeigneten Prüfmerkmal (56, 58a, 58b) durch den Bediener in der bildlichen Darstellung (32) zu ermöglichen, wobei das zumindest eine angezeigte geeignete Prüfmerkmal durch die Selektion zu einem selektierten Prüfmerkmal (56') wird, und dass die Auswerte- und Steuereinheit (26, 28) ferner dazu ausgebildet ist, in Abhängigkeit von dem selektierten Prüfmerkmal (56') individuelle Messwerte an dem ersten Geometrieelement (46) aufzunehmen und einen Zahlenwert zu bestimmen, der eine dimensionelle Eigenschaft des ersten Geometrieelements (46) repräsentiert, die dem selektierten Prüfmerkmal (56') entspricht.

11. Computerprogrammprodukt mit Programmcode, der dazu ausgebildet ist, ein Verfahren nach einem der Ansprüche 1 bis 9 auszuführen, wenn der Programmcode auf einer Auswerte- und Steuereinheit (26, 28) eines Koordinatenmessgerätes (12) ausgeführt wird, das ein Bildanzeigegerät (30), zumindest ein Auswahlwerkzeug (54) und einen Messkopf (16) zum Aufnehmen von Messwerten besitzt, die eine Position von zumindest einem Messpunkt an einem Messobjekt repräsentieren.

## Claims

1. Method for determining dimensional properties of a measured object having a multiplicity of geometric elements (46, 48, 50, 52), comprising the following steps:
- providing a coordinate measuring machine (12) having a measuring head (16) for recording measured values representing a position of at least one measurement point on the measured object,
- providing a database (34) containing a multiplicity of predefined measurement elements (36) and a multiplicity of typical test features (38) with respect to the predefined measurement elements (36) wherein each typical test feature from the multiplicity of typical test features (38) represents a defined dimensional property of at least one predefined measurement element,
- providing a pictorial representation (32) of the measured object, which pictorial representation shows at least one first and one second geometric element (46, 48) from the multiplicity of geometric elements (46, 48, 50, 52),
- selecting the geometric elements (46, 48) on the basis of the pictorial representation (32) and selecting test features (56, 58a, 58b) for the geometric elements (46, 48), and
- creating in a computer-aided manner a defined measurement sequence (40) depending on the test features,
**characterized**
**in that** the step of selecting comprises selecting individual geometric elements in the pictorial representation (32) of the measured object by a user,
**in that** suitable test features (56, 58a, 58b) for the first geometric element (46') are graphically displayed in the pictorial representation (32) of the measured object if the operator selects the first geometric element (46'), wherein the suitable test features (56, 58a, 58b) are determined from the multiplicity of typical test features (38) by the selected first geometric element (46') being assigned to a predefined measurement element from the multiplicity of predefined measurement elements (36), and wherein the display of the test features offered for further selection changes depending on the current selection if the operator selects a different geometric element and/or further geometric elements (48),
**in that** at least one displayed suitable test feature (56, 58a, 58b) for the first geometric element (46') is selected by the operator in the pictorial representation (32) of the measured object, wherein the at least one displayed suitable test feature becomes, as a result of the selection, a selected test feature (56') for the first geometric element (46), and
**in that** the defined measurement sequence (40) is created in a computer-aided manner depending on the selected test feature (56'),
and furthermore comprising the following further steps
- recording (96) individual measured values on the first geometric element (46) with the aid of the measuring head (16) and depending on the defined measurement sequence (40), and
- determining (98) a numerical value depending on the individual measured values, wherein the numerical value represents a dimensional property of the first geometric element (46) which corresponds to the selected test feature (56').

2. Method according to Claim 1, wherein the database (34) furthermore contains a multiplicity of predefined linkage elements (39), and wherein each predefined linkage element represents a defined dimensional property in relation to at least two of the predefined measurement elements (36).

3. Method according to Claim 2, wherein the second geometric element (48) is furthermore selected on the basis of the pictorial representation (32), and wherein on the basis of the database (34) suitable linkage elements (64, 66, 68) for the selected first and second geometric elements (46', 48') are displayed for further selection.

4. Method according to any of Claims 1 to 3, wherein the numerical value with respect to the selected test feature (56') is displayed in the pictorial representation.

5. Method according to any of Claims 1 to 4, wherein the measured object is scanned with the aid of the measuring head (16) in order to provide the pictorial representation (32).

6. Method according to any of Claims 1 to 5, wherein the pictorial representation (32) of the measured object is generated on the basis of CAD data.

7. Method according to any of Claims 1 to 6, wherein the steps of selecting are repeated for a plurality of geometric elements (46, 48) from the multiplicity of geometric elements and/or for a plurality of displayed suitable test features (56, 58, 60, 62), and wherein the defined measurement sequence (40) is created automatically depending on all selection steps.

8. Method according to any of Claims 1 to 7, wherein a selection tool (54) is provided, and wherein suitable test features (56, 58a, 58b) are displayed in each case temporarily while the selection tool (54) is positioned in the region of the displayed first geometric element (46).

9. Method according to any of Claims 1 to 8, wherein the geometric elements (46, 48, 50, 52) of the measured object are automatically identified on the basis of the database (34) and assigned to the predefined measurement elements in order to display the suitable test features.

10. Device for determining dimensional properties of a measured object having a multiplicity of geometric elements (46, 48, 50, 52), comprising a workpiece receptacle (14) for holding the measured object, comprising a measuring head (16), which is movable relative to the workpiece receptacle (14) and is configured for recording measured values representing a position of at least one measurement point on the measured object, comprising an evaluation and control unit (26, 28), which moves the measuring head relative to the workpiece receptacle (14) depending on a defined measurement sequence (40), and comprising an image display appliance (30), wherein the evaluation and control unit (26, 28) has a database (34) containing a multiplicity of predefined measurement elements (36) and a multiplicity of typical test features (38) with respect to the predefined measurement elements (36), wherein each typical test feature from the multiplicity of typical test features (38) represents a defined dimensional property of at least one predefined measurement element, wherein the evaluation and control unit (26, 28) is configured to display a pictorial representation (32) of the measured object, which pictorial representation shows at least one first and one second geometric element (46, 48) from the multiplicity of geometric elements (46, 48, 50, 52), on the image display appliance (30), wherein the evaluation and control unit (26, 28) provides a first selection tool (54) in order to enable selection of the geometric elements (46, 48) on the basis of the pictorial representation (32) and selection of test features (56, 58a, 58b), and wherein the evaluation and control unit (26, 28) is furthermore configured to create a defined measurement sequence (40) depending on the selected test features, **characterized in that** the first selection tool (54) enables targeted selection of individual geometric elements in the pictorial representation (32) of the measured object by an operator, **in that** the evaluation and control unit (26, 28) is furthermore configured to graphically display suitable test features (56, 58a, 58b) for the first geometric element (46) in the pictorial representation (32) of the measured object if the operator selects the first geometric element (46'), wherein the evaluation and control unit (26, 28) determines the suitable test features (56, 58a, 58b) depending on the selection from the multiplicity of typical test features (38) in the database (34) by virtue of the fact that said evaluation and control unit assigns the selected first geometric element (46') to a predefined measurement element from the multiplicity of predefined measurement elements (36), and wherein the display of the test features offered for further selection changes depending on the current selection if the operator selects a different geometric element and/or further geometric elements (48), **in that** the evaluation and control unit (26, 28) furthermore provides a second selection tool in order to enable selection of at least one displayed suitable test feature (56, 58a, 58b) by the operator in the pictorial representation (32), wherein the at least one displayed suitable test feature becomes, as a result of the selection, a selected test feature (56'), and **in that** the evaluation and control unit (26, 28) is furthermore configured, depending on the selected test feature (56'), to record individual measured values on the first geometric element (46) and to determine a numerical value representing a dimensional property of the first geometric element (46) which corresponds to the selected test feature (56').

11. Computer program product comprising program code configured to perform a method according to any of Claims 1 to 9 when the program code is executed on an evaluation and control unit (26, 28) of a coordinate measuring machine (12) having an image display appliance (30), at least one selection tool (54) and a measuring head (16) for recording measured values representing a position of at least one measurement point on a measured object.

## Revendications

1. Procédé de détermination des propriétés dimensionnelles d'un objet de mesure, qui possède une pluralité d'éléments géométriques (46, 48, 50, 52), comprenant les étapes suivantes :
- fourniture d'un appareil de mesure de coordonnées (12) pourvu d'une tête de mesure (16) servant à enregistrer des valeurs mesurées qui représentent une position d'au moins un point de mesure sur l'objet de mesure,
- fourniture d'une base de données (34) qui contient une pluralité d'éléments de mesure (36) prédéfinis et une pluralité de caractéristiques de contrôle (38) types à propos des éléments de mesure (36) prédéfinis, chaque caractéristique de contrôle type parmi la pluralité de caractéristiques de contrôle (38) types représentant une propriété dimensionnelle définie d'au moins un élément de mesure prédéfini,
- fourniture d'une représentation visuelle (32) de l'objet de mesure, laquelle indique au moins un premier et un deuxième élément géométrique (46, 48) parmi la pluralité d'éléments géométriques (46, 48, 50, 52),
- sélection des éléments géométriques (46, 48) à l'aide de la représentation visuelle (32) et sélection de caractéristiques de contrôle (56, 58a, 58b) pour les éléments géométriques (46, 48), et
- création assistée par ordinateur d'une séquence de mesure définie (40) en fonction des caractéristiques de contrôle,
**caractérisé en ce**
**que** l'étape de sélection contient une sélection d'éléments géométriques individuels dans la représentation visuelle (32) de l'objet de mesure par un opérateur,
**que** des caractéristiques de contrôle (56, 58a, 58b) appropriées pour le premier élément géométrique (46') sont affichées sous forme graphique dans la représentation visuelle (32) de l'objet de mesure lorsque l'opérateur sélectionne le premier élément géométrique (46'), les caractéristiques de contrôle (56, 58a, 58b) appropriées étant déterminées à partir de la pluralité de caractéristiques de contrôle (38) types en associant le premier élément géométrique (46') sélectionné à un élément de mesure prédéfini de la pluralité d'éléments de mesure (36) prédéfinis, et l'affichage des caractéristiques de contrôle proposées pour la sélection supplémentaire variant en fonction de la sélection actuelle lorsque l'opérateur sélectionne un autre élément géométrique et/ou des éléments géométriques (48) supplémentaires,
**qu'**au moins une caractéristique de contrôle (56, 58a, 58b) appropriée affichée pour le premier élément géométrique (46') est sélectionnée par l'opérateur dans la représentation visuelle (32) de l'objet de mesure, l'au moins une caractéristique de contrôle appropriée affichée devenant, par la sélection, une caractéristique de contrôle (56') sélectionnée pour le premier élément géométrique (46), et
**que** la séquence de mesure (40) définie est créée avec assistance par ordinateur en fonction de la caractéristique de contrôle (56') sélectionnée,
et comprenant en outre les étapes supplémentaires suivante
- enregistrement (96) de valeurs mesurées individuelles au niveau du premier élément géométrique (46) à l'aide de la tête de mesure (16) et en fonction de la séquence de mesure (40) définie, et
- détermination (98) d'une valeur numérique en fonction des valeurs mesurées individuelles, la valeur numérique représentant une propriété dimensionnelle du premier élément géométrique (46), laquelle correspond à la caractéristique de contrôle (56') sélectionnée.

2. Procédé selon la revendication 1, la base de données (34) contenant en outre une pluralité d'éléments de liaison (39) prédéfinis, et chaque élément de liaison prédéfini représentant une propriété dimensionnelle définie en référence à au moins deux des éléments de mesure (36) prédéfinis.

3. Procédé selon la revendication 2, le deuxième élément géométrique (48) étant en outre sélectionné à l'aide de la représentation visuelle (32), et des éléments de liaison (64, 66, 68) appropriés pour le premier et le deuxième élément géométrique (46', 48') sélectionnés étant affichés à l'aide de la base de données (34) pour la sélection supplémentaire.

4. Procédé selon l'une des revendications 1 à 3, la valeur numérique à propos de la caractéristique de contrôle (56') sélectionnée étant affichée dans la représentation visuelle.

5. Procédé selon l'une des revendications 1 à 4, l'objet de mesure étant palpé à l'aide de la tête de mesure (16) afin de fournir la représentation visuelle (32) .

6. Procédé selon l'une des revendications 1 à 5, la représentation visuelle (32) de l'objet de mesure étant générée à l'aide de données de CAO.

7. Procédé selon l'une des revendications 1 à 6, les étapes de sélection étant répétées pour plusieurs éléments géométriques (46, 48) parmi la pluralité d'éléments géométriques et/ou pour plusieurs caractéristiques de contrôle (56, 58, 60, 62) appropriées affichées, et la séquence de mesure (40) définie étant créée automatiquement en fonction de toutes les étapes de sélection.

8. Procédé selon l'une des revendications 1 à 7, un outil de sélection (54) étant fourni et l'affichage des caractéristiques de contrôle (56, 58a, 58b) appropriées s'effectuant respectivement temporairement pendant que l'outil de sélection (54) est positionné dans la zone du premier élément géométrique (46) affiché.

9. Procédé selon l'une des revendications 1 à 8, les éléments géométriques (46, 48, 50, 52) de l'objet de mesure étant identifiés automatiquement à l'aide de la base de données (34) et associés aux éléments de mesure prédéfinis afin d'afficher les caractéristiques de contrôle appropriées.

10. Dispositif de détermination des propriétés dimensionnelles d'un objet de mesure, qui possède une pluralité d'éléments géométriques (46, 48, 50, 52), comprenant un attachement d'outil (14) destiné à maintenir l'objet de mesure, comprenant une tête de mesure (16) qui peut être déplacée par rapport à l'attachement d'outil (14) et qui est configurée pour enregistrer des valeurs mesurées qui représentent une position d'au moins un point de mesure sur l'objet de mesure, comprenant une unité d'interprétation et de commande (26, 28) qui déplace la tête de mesure en fonction d'une séquence de mesure (40) définie par rapport à l'attachement d'outil (14), et comprenant un appareil d'affichage d'image (30), l'unité d'interprétation et de commande (26, 28) possédant une base de données (34) qui contient une pluralité d'éléments de mesure (36) prédéfinis et une pluralité de caractéristiques de contrôle (38) types à propos des éléments de mesure (36) prédéfinis, chaque caractéristique de contrôle type parmi la pluralité de caractéristiques de contrôle (38) types représentant une propriété dimensionnelle définie d'au moins un élément de mesure prédéfini, l'unité d'interprétation et de commande (26, 28) étant configurée pour afficher sur l'appareil d'affichage d'image (30) une représentation visuelle (32) de l'objet de mesure, laquelle indique au moins un premier et un deuxième élément géométrique (46, 48) parmi la pluralité d'éléments géométriques (46, 48, 50, 52), l'unité d'interprétation et de commande (26, 28) fournissant un premier outil de sélection (54) afin de permettre une sélection des éléments géométriques (46, 48) à l'aide de la représentation visuelle (32) et une sélection de caractéristiques de contrôle (56, 58a, 58b), et l'unité d'interprétation et de commande (26, 28) étant en outre configurée pour créer une séquence de mesure définie (40) en fonction des caractéristiques de contrôle sélectionnées, **caractérisé en ce que** le premier outil de sélection (54) permet une sélection ciblée d'éléments géométriques individuels dans la représentation visuelle (32) de l'objet de mesure par un opérateur, **en ce que** l'unité d'interprétation et de commande (26, 28) est en outre configurée pour afficher sous forme graphique dans la représentation visuelle (32) de l'objet de mesure des caractéristiques de contrôle (56, 58a, 58b) appropriées pour le premier élément géométrique (46) lorsque l'opérateur sélectionne le premier élément géométrique (46'), l'unité d'interprétation et de commande (26, 28) déterminant les caractéristiques de contrôle (56, 58a, 58b) appropriées en fonction de la sélection à partir de la pluralité de caractéristiques de contrôle (38) types dans la base de données (34) en associant le premier élément géométrique (46') sélectionné à un élément de mesure prédéfini de la pluralité d'éléments de mesure (36) prédéfinis, et l'affichage des caractéristiques de contrôle proposées pour la sélection supplémentaire variant en fonction de la sélection actuelle lorsque l'opérateur sélectionne un autre élément géométrique et/ou des éléments géométriques (48) supplémentaires, **en ce que** l'unité d'interprétation et de commande (26, 28) fournit en outre un deuxième outil de sélection afin de permettre une sélection d'au moins une caractéristique de contrôle (56, 58a, 58b) appropriée affichée par l'opérateur dans la représentation visuelle (32), l'au moins une caractéristique de contrôle appropriée affichée devenant, par la sélection, une caractéristique de contrôle (56') sélectionnée, et **en ce que** l'unité d'interprétation et de commande (26, 28) est en outre configurée pour enregistrer des valeurs mesurées individuelles au niveau du premier élément géométrique (46) en fonction de la caractéristique de contrôle (56') sélectionnée et pour déterminer une valeur numérique qui représente une propriété dimensionnelle du premier élément géométrique (46), laquelle correspond à la caractéristique de contrôle (56') sélectionnée.

11. Produit de programme informatique comprenant un code de programme qui est configuré pour mettre en œuvre un procédé selon l'une des revendications 1 à 9 lorsque le code de programme est exécuté sur une unité d'interprétation et de commande (26, 28) d'un appareil de mesure de coordonnées (12) qui possède un appareil d'affichage d'image (30), au moins un outil de sélection (54) et une tête de mesure (16) servant à enregistrer des valeurs mesurées qui représentent une position d'au moins un point de mesure sur un objet de mesure.
